Europäisches Patentamt

(19) European Patent Office

Office européen des brevets

(11) Veröffentlichungsnummer : **0 058 136**
**B1**

(12) **EUROPÄISCHE PATENTSCHRIFT**

(45) Veröffentlichungstag der Patentschrift :
07.11.84

(21) Anmeldenummer : 82810040.4

(22) Anmeldetag : 29.01.82

(51) Int. Cl.³ : **C 01 B   3/04**, B 01 J 21/06,
B 01 J 23/06

(54) Verfahren zur Produktion von Wasserstoff mittels heterogener Photoredoxkatalyse und dabei einsetzbare neue Katalysatoren.

(30) Priorität : 04.02.81 CH 741/81

(43) Veröffentlichungstag der Anmeldung :
18.08.82 Patentblatt 82/33

(45) Bekanntmachung des Hinweises auf die Patenterteilung : 07.11.84 Patentblatt 84/45

(84) Benannte Vertragsstaaten :
CH DE FR GB IT LI

(56) Entgegenhaltungen :
FR-A- 2 366 703
US-A- 3 969 495
US-A- 4 045 315
US-A- 4 105 517
NATURE, Band 289, Nr. 5794 15. Januar 1981 Chesham BORGARELLO et al. "Photochemical Cleavage of Water by Photocatalysis" Seiten 158 bis 160

(73) Patentinhaber : CIBA-GEIGY AG
Postfach
CH-4002 Basel (CH)

(72) Erfinder : Bühler, Niklaus, Dr.
Gartenweg 30
CH-4310 Rheinfelden (CH)
Erfinder : Reber, Jean François, Dr.
Gstaltenrainweg 69
CH-4125 Riehen (CH)
Erfinder : Meier, Kurt, Dr.
Ulmenstrasse 11
CH-4123 Allschwil (CH)
Erfinder : Rusek, Milos
Tiefengrabenstrasse 49
CH-4102 Binningen (CH)

**Beschreibung**

Die Erfindung betrifft ein Verfahren zur Produktion von Wasserstoff mittels heterogener Photoredoxkatalyse, dabei einsetzbare neue Katalysatoren und Verfahren zu deren Herstellung.

Aus der Literatur sind verschiedene heterogene photokatalytische und photosynthetische Prozesse z. B. zur Herstellung von Brennstoffen, wie Wasserstoff oder Methanol, bekannt, bei denen zusammen mit Metallelektroden, bevorzugt Platinelektroden, n- oder p-Halbleiterpulver als Photoanoden bzw. -kathoden verwendet werden (sogenannte Halbleiter/Lösung-Systeme). Dabei handelt es sich im allgemeinen um Zweizellen-Systeme. Geeignete Halbleiter sind beispielsweise ZnO, $TiO_2$, CdO, CdS, CdSe, CdTe, GaP, $Ag_2S$, Sr-$TiO_3$, $SnO_2$, $Fe_2O_3$, $Fe_3O_4$ und $WO_3$. Sauerstoff-freie farbige n-Halbleiter, wie CdS und CdSe, sind in wässrigem Medium nicht ausreichend stabil, da sie unter Lichteinwirkung photoanodisch zersetzt werden. Sie müssen daher durch den Einbau geeigneter Redoxsysteme, wie $S^{2-}/S_x^{2-}$, $SO_3^{2-}/SO_4^{2-}$ oder $S_2O_3^{2-}/S_4O_6^{2-}$, stabilisiert werden. Sauerstoff-freie farbige n-Halbleiter sind aber, da sie einen wesentlichen Teil des Sonnenlichts zu absorbieren vermögen, von besonderem wirtschaftlichem Interesse. Systeme der genannten Art können z. B. für die Photoelektrolyse von Wasser in Wasserstoff und Sauerstoff, für die Oxidation von Cyaniden oder Sulfiten zu Cyanaten bzw. Sulfaten oder für die Gewinnung von Methanol aus $CO_2$ bzw. Ammoniak aus $N_2$ verwendet werden. Bei der Sulfitoxidation wird der Sauerstoff an der Kathode reduziert.

Es wurde auch vorgeschlagen, für die Decarboxylierung von aliphatischen Monocarbonsäuren zu Alkanen und $CO_2$ (Photo-Kolbe-Reaktion), die Photoelektrolyse von Wasser oder die Oxidation von Cyaniden zu Cyanaten bei gleichzeitiger Reduktion von Sauerstoff mit Platin beschichtetes $TiO_2$ oder platinisiertes $SrTiO_3$ als Einzellen-System zu verwenden. Durch die Verwendung von platinbeschichtetem $TiO_2$-Pulver für die Decarboxylierung von aliphatischen Monocarbonsäuren kann gegenüber entsprechenden Zweizellen-Systemen die Effizienz der Photoreaktion erhöht werden. Andere mit Edelmetallen beschichtete n-Halbleiter, wie mit Platin beschichtetes Cadmiumsulfid, sind für solche Decarboxylierungsreaktionen weder vorbeschrieben noch geeignet. Bei der genannten Decarboxylierung von aliphatischen Monocarbonsäuren entstehen zur Hauptsache Alkane und $CO_2$ im Verhältnis von ca. 1 : 1, aber nur unbedeutende Mengen an Wasserstoff, da ein grosser Teil der kathodisch entstehenden Wasserstoffradikale mit den anodisch entstandenen Alkylradikalen zu Alkanen rekombiniert. [Vgl. z. B. Accounts of Chemical Research, *12*, 303 (1979) ; Solar Energy, *20*, 443 (1978) ; Science, *207*, 139 (1980) ; JACS, *100*, 2239 und 3985 (1978) ; JACS, *98*, 2774 (1378) ; JACS, *99*, 2839 (1977) ; J. Phys. Chem., *81*, 1484 (1977) ; J. Phys. Chem., *84*, 1705 (1980) ; Revue Phys. Appl., *15*, 463 (1980) ; J. Electrochem. Soc., *124*, 719 (1977), Proc. Nat. Acad. Sci., *72*, 1518 (1975)].

Schliesslich ist bekannt, dass sich Gemische aus Wasser und Kohlenstoff oder Gemische aus Wasser und Kohlehydraten, wie Cellulose, Zucker, Stärke, in Gegenwart von pulverförmigen $RuO_2/TiO_2/Pt$-Katalysatoren unter Lichteinwirkung in Wasserstoff im Gemisch mit $CO_2$ und CO umwandeln lassen. Dabei kann die Umsetzung von Kohlehydraten allerdings mit sichtbarem Licht (Sonnenlicht) mit nur geringer Effizienz durchgeführt werden. Wasserstoff kann photokatalytisch auch durch Wasserspaltung in Gegenwart von Halbleiterpulvern der vorerwähnten Art, wie $TiO_2$, in Gegenwart von tertiären Aminen, wie Aethylendiamintetraessigsäure (EDTA) oder Triäthylamin als Reduktionsmittel gewonnen werden. Die Effizienz dieses Systems ist jedoch relativ gering, und das Reduktionsmittel wird bei dieser Redoxreaktion irreversibel zu nicht weiter verwendbaren wertlosen Produkten oxidiert [vgl. z. B. Nature, *282*, 283 (1979) und *286*, 474 (1980) sowie 7th International Congress on Catalysis, Tokyo, 3./4.7.1980, Preprint].

Wasserstoff kann unter der Einwirkung von sichtbarem Licht auch aus Wasser durch Reduktion von Methylviologen mit Ruthenium-tris-bipyridyl als Sensibilisator in Gegenwart von platindotierten $TiO_2/RuO_2$-Teilchen und in Gegenwart von EDTA erzeugt werden. Dabei wird das EDTA-wie schon erwähntirreversibel oxidiert [vgl. Angew. Chem., *92*, 663 (1980)].

Diese vorbekannten Verfahren haben bisher keine wirtschaftliche Bedeutung erlangt.

Gegenstand der Erfindung ist ein Verfahren zur selektiven Produktion von Wasserstoff mittels heterogener Photoredoxkatalyse, indem man in der Suspension eines mindestens teilweise mit Cu, Cr, Ni, Co oder einem Edelmetall oder Gemischen davon beschichteten Cadmiumsulfid-, Cadmiumsulfoselenid- oder Titandioxid-Halbleiterpulvers Gemische aus Wasser und Alkalimetall-, Erdalkalimetall- oder Ammoniumsulfiten oder -sulfiden unter Lichteinwirkung zur Reaktion bringt.

Die Reaktion kann z. B. durch folgendes Schema veranschaulicht werden :

$$SO_3^{2-} + 2\,OH^- \longrightarrow SO_4^{2-} + H_2O + 2\,e^- \quad \text{(Oxidation)}$$

$$\underline{2\,H^+ + 2\,e^- \longrightarrow H_2 \qquad\qquad\qquad \text{(Reduktion)}}$$

$$SO_3^{2-} + H_2O \longrightarrow SO_4^{2-} + H_2 \quad \text{(Gesamt-Reaktion)}.$$

Das erfindungsgemässe Verfahren zeichnet sich durch seine Einfachheit und gute Effizienz aus, selbst bei Verwendung von mit Cu, Cr, Ni, Co oder Edelmetallen beschichtetem Titandioxid, obwohl dieses im allgemeinen als nicht genügend in der Leitungsbandhöhe für die Wasserstoffentwicklung gehalten wird [vgl. z. B. Solar Energy, *20*, 443 (1978), Accounts of Chemical Research, *12*, 303 (1979) und Proc. Nat. Acad. Sci, *72*, 1518 (1975)]. Die einzusetzenden Ausgangsmaterialien sind leicht zugänglich und billig und ermöglichen eine effiziente Wasserstoffproduktion unter stabilen Bedingungen, verbunden mit einem nützlichen und vorteilhaften oxidativen Prozess. Dabei werden die Alkalimetall-, Erdalkalimetall- oder Ammoniumsulfite zu den ökologisch weniger bedenklichen und gegebenenfalls wiederverwertbaren Sulfaten (z. B. als Gips) und die Sulfide zu Schwefel bzw. Polysulfiden oxidiert. Die Reduktionsmittel selbst können in an sich bekannter und einfacher Weise aus in grossen Mengen anfallenden Industrieabfällen gewonnen werden, z. B. aus Sulfitablaugen, wie sie in der Papierindustrie anfallen, durch Verwertung des bei der Kohle- und Erdölaufbereitung in grossen Mengen entstehenden Schwefels oder von $SO_2$-haltigen Industrieabgasen, aus Sulfidabwässern in der Küpenfärberei oder aus dem bei Kohlevergasungsprozessen gebildeten Schwefeldioxid. Dieses Schwefeldioxid musste bisher durch besondere Entschwefelungsverfahren aus den Kokereigasen entfernt werden, z. B. nach dem Stretford-Prozess [vgl. Hydrocarbon Processing and Petroleum Refiner, *40*, 141-146 (1961)] durch katalytische Reduktion von Schwefeldioxid zu Schwefel, wobei der dabei oxidierte Katalysator wieder regeneriert werden muss. Nach dem sogenannten Katasulf-Prozess [vgl. z. B. Chem. Fabrik II (1/2), 10 (1938) und deutsche Patentschriften 510 488, 576 137 und 634 427] wird das Schwefeldioxid mit dem ebenfalls im Kokereigas vorhandenen Ammoniak zu Ammoniumsulfit umgesetzt. Dieses wird in einem aufwendigen Verfahren mit Hilfe von Schwefelsäure bei erhöhten Temperaturen (ca. 150 °C) zu Ammoniumsulfat (Düngemittel) und Schwefel umgesetzt. Nach dem erfindungsgemässen Verfahren kann Ammoniumsulfit auf bedeutend einfachere Weise in das Ammoniumsulfat übergeführt werden.

Zum Suspendieren (Aufschlämmen) der Katalysatoren kommen z. B. Wasser, Alkanole mit bis zu 6 C-Atomen, wie Methanol, Aethanol, Propanol, Isopropanol, Butanole und Hexanole, aliphatische oder cyclische Aether, wie Diäthyläther, Di-isopropyläther, Tetrahydrofuran und Dioxan, Cellosolve oder Gemische von Wasser mit Alkoholen, wie Methanol und Aethanol, oder mit Tetrahydrofuran, Dioxan oder Cellosolve in Betracht. Bevorzugt wird Wasser verwendet.

Geeignete Alkalimetall- oder Erdalkalimetallsulfite bzw. -sulfide sind das Na-, K-, Li-, Mg-, Ca- und Basulfit bzw. -sulfid. Bevorzugt verwendet man ein Alkalimetallsulfit oder -sulfid, Ammoniumsulfit oder -sulfid, besonders Natrium- oder Ammoniumsulfit.

Die Reaktionstemperaturen liegen im allgemeinen zwischen 20 °C und dem Siedepunkt des verwendeten Suspensionsmittels. Bevorzugt arbeitet man bei einer Temperatur zwischen 40 und 80 °C.

Als Edelmetalle kommen z. B. Ru, Os, Rh, Ir, Pd, Pt, Ag oder Au in Betracht. Bevorzugt sind Rhodium, Nickel, Osmium, Ruthenium sowie Nickel/Rhodium- und Silber/Platingemische ; besonders bevorzugt ist Platin.

Der Anteil Metall auf dem Halbleiterpulver liegt zweckmässig zwischen 0,001 und 10 Gew.-%, bevorzugt 0,05 und 8 Gew.-%, bezogen auf das Gewicht des Halbleiterpulvers.

Die spezifische Oberfläche der Halbleiterpulver kann innerhalb breiter Grenzen variieren und hängt im wesentlichen von der Art des Halbleiters ab. Cadmiumsulfid und Cadmiumsulfoselenid weisen vorzugsweise eine spezifische Oberfläche von 0,1 bis 20 $m^2/g$, bevorzugt unterhalb 7 $m^2/g$ und vor allem unterhalb 1,5 $m^2/g$ auf, während bei Titandioxid die spezifische Oberfläche bevorzugt zwischen 1 und 250 $m^2/g$ und insbesondere bei ca. 10 $m^2/g$ liegt.

Als Cadmiumsulfid verwendet man mit Vorteil solches sogenannter elektronischer Qualität, in dem bis 1 Gew.-% des Schwefels durch Sauerstoff ersetzt ist und das einen geringen Chlorgehalt, vorzugsweise unter 40 ppm, aufweist. Beim Titandioxid genügt im allgemeinen technische Qualität (Reinheit ca. 95 %). Als Cadmiumsulfoselenid [CdS(Se)] verwendet man bevorzugt solches mit 10 bis 60 Gew.-% Selengehalt.

Die Metallpartikel auf dem Halbleiterpulver weisen vorzugsweise eine Korngrösse von 10 Å bis 1 000 Å auf. Bei mit Platin beschichtetem Titandioxid hat sich eine Korngrösse des Platins von 10 bis 150 Å als besonders vorteilhaft erwiesen.

Die Katalysatoren werden zweckmässig in Mengen von 0,05 bis 5 Gew.-%, bevorzugt 0,4 bis 2,0 Gew.-%, bezogen auf das Reaktionsvolumen (Reaktionspartner + Suspensionsmittel) eingesetzt.

Bei Titandioxidkatalysatoren wird generell die Anatasmodifikation bevorzugt. Bevorzugte Katalysatoren sind mindestens teilweise mit Rhodium, Nickel, Osmium, Ruthenium, Nickel/Rhodium- oder Silber/Platingemischen beschichtete Cadmiumsulfoselenid- oder Titandioxid-Halbleiterpulver (Anatas-Modifikation) und insbesondere Cadmiumsulfid-Halbleiterpulver. Ganz besonders bevorzugt sind mindestens teilweise mit Platin beschichtete Cadmiumsulfid-, Cadmiumsulfoselenid- oder Titandioxid-Halbleiterpulver (Anatas-Modifikation).

Als Lichtquelle für die erfindungsgemässe Redoxreaktion kann an sich beliebiges Licht eingesetzt werden, dessen Wellenlänge je nach Halbleiter zwischen ca. 200 und 650 nm liegt. Geeignete Lichtquellen sind Sonnenlicht, besonders bei Verwendung definitionsgemässer Cadmiumkatalysatoren, oder z. B. gegebenenfalls metallatomdotierte Quecksilberhochdrucklampen, Xenondampflampen, Quecksilber-Xenonlampen, Quecksilberniederdruck-, und mitteldrucklampen, Halogenlampen, Wolframlampen oder $D_2$-Lampen. Die Wellenlängen betragen für Cadmiumsulfid- und Cadmiumsulfoselenid-Katalysatoren im allgemeinen bis ca. 600 nm, für Titandioxid-Katalysatoren bis ca. 400 nm.

Die quantitative Bestimmung des bei der Reaktion entwickelten Wasserstoffs kann in an sich bekannter Weise erfolgen, beispielsweise durch Hydrierung geeigneter aromatischer Verbindungen.

Die gebildeten Sulfate bzw. Polysulfide oder der Schwefel können in üblicher Weise abgetrennt werden, z. B. durch Ausfällen, gegebenenfalls in Form schwerlöslicher Salze, wie Erdalkalimetallsalze. Der Schwefel kann z. B. durch Ansäuern der Reaktionslösung isoliert werden.

Die erfindungsgemäss einzusetzenden Katalysatoren können beispielsweise wie folgt hergestellt werden :

1. Durch photokatalytische Abscheidung der Metalle auf den Halbleiterpulvern. Dabei wird das Halbleiterpulver zweckmässig unter Zusatz von Säure oder Salzen davon in einer wässrigen Lösung oder Suspension einer geeigneten Metallverbindung oder eines Gemisches geeigneter Metallverbindungen, gegebenenfalls in Gegenwart eines Puffers, wie Natriumacetat, Kaliumacetat oder Natriumformiat, suspendiert (pH vorzugsweise ca. 1,0 bis 9,0) und dann belichtet, bevorzugt bei einer Temperatur zwischen 40 und 60 °C. Dabei müssen für die Beschichtung von Cadmiumsulfid- und Cadmiumsulfoselenid-Halbleiterpulvern Lichtquellen mit einem hohen UV-C-Anteil (vgl. Houben-Weyl, Band Photochemie I, S. 42), z. B. Quecksilberhochdrucklampen, eingesetzt werden. Dieses Verfahren ist ein weiterer Gegenstand vorliegender Erfindung. Für Titandioxidkatalysatoren können an sich beliebige Lichtquellen der vorerwähnten Art verwendet werden.

Als Säuren eignen sich z. B. Verbindungen der Formel I und II R—COOH (I) und HOOC—R'—COOH (II). Als Salze davon kommen z. B. die entsprechenden Natrium-, Kalium-, Lithium- und Ammoniumsalze in Betracht. Dabei stellt R geradkettiges oder verzweigtes $C_{1-8}$-Alkyl, besonders $C_{1-4}$-Alkyl, $C_{3-8}$-Cycloalkyl, —$CH_2X$, —$CHX_2$, —$CX_3$ mit X = Fluor oder Brom und insbesondere Chlor, —$(CH_2)_n$—OH, —$(CH_2)_n$—O—$C_{1-8}$-Alkyl, besonders —$(CH_2)_n$—O—$C_{1-4}$-Alkyl oder —$(CH_2)_n$—O—Phenyl mit n = 1 bis 8 und insbesondere 1 bis 4, Phenyl, Naphthyl oder Benzyl dar, und R' ist —$C_mH_{2m}$— mit m = 1 bis 8, besonders 1 bis 6. Als Beispiele solcher Säuren seien genannt : Ameisensäure, Essigsäure, Propionsäure, Buttersäure, Isobuttersäure, 2-Methylbuttersäure, Pivalinsäure, 3,3-Dimethylbuttersäure, Capronsäure, 2-Methylhexansäure, Oenanthsäure, Caprylsäure, Cyclopropancarbonsäure, Cyclopentancarbonsäure, Cyclohexancarbonsäure, Chloressigsäure, Bromessigsäure, Dichloressigsäure, Trichloressigsäure, Trifluoressigsäure, Glykolsäure, Methoxy-, Aethoxy, Isopropoxy-, n-Butoxy und n-Hexyloxyessigsäure, Methoxypropionsäure, Aethoxyessigsäure, Methoxybuttersäure, Phenoxyessigsäure, Phenoxypropionsäure, Phenoxybuttersäure, Benzoesäure, Naphthoesäure, und Ameisensäurebenzylester ; Malonsäure, Bernsteinsäure, Methylmalonsäure, Glutarsäure, Methylbernsteinsäure, Adipinsäure, 2,2-Dimethylbernsteinsäure und Pimelinsäure. Besonders bevorzugt verwendet man Ameisensäure, Chloressigsäure oder Glykolsäure und vor allem Essigsäure.

2. Durch elektrolytische Abscheidung der Metalle auf den Halbleiterpulvern gemäss dem in J. Phys. Chem. *84*, 1705 (1980) beschriebenen Verfahren.

3. Durch hydrogenolytische Abscheidung der Metalle auf den Halbleiterpulvern, was ein weiterer Gegenstand der Erfindung ist. Dabei wird das Halbleiterpulver zweckmässig mit einer wässrigen Lösung einer geeigneten Metallverbindung oder eines Gemisches geeigneter Metallverbindungen imprägniert, gegebenenfalls unter Zusatz von Säure, und dann bei erhöhter Temperatur, vorzugsweise zwischen 60 und 160 °C, getrocknet, worauf man die Metallverbindung mit $H_2$ reduziert. Die Reduktion wird bevorzugt bei Temperaturen zwischen 150 und 400 °C vorgenommen. Als Säuren können sowohl anorganische als auch organische Säuren, z. B. organische Säuren der unter (1) genannten Art. verwendet werden. Bevorzugt sind HCl und Essigsäure.

4. Durch reduktive Kolloidherstellung, z. B. gemäss dem in Angew. Chem., *92*, 663 (1980) beschriebenen Verfahren. Dabei wird zuerst die Metallverbindung reduziert und dann mit dem Halbleiterpulver vermischt.

5. Durch Bedampfen der Halbleiterpulver mit den Metallen, besonders Bedampfen von Titandioxid-, Cadmiumsulfid- oder Cadmiumsulfoselenid-Pulvern mit Platin, ab hochschmelzenden, erhitzten Metalldrähten, besonders Wolfram-, Tantal-, Niob- oder Osmiumdrähten, z. B. bei 10 V/60 Amp.

6. Durch UV-Bestrahlung einer wässrigen Suspension des Halbleiterpulvers und einer Metallverbindung, bevorzugt mit einer Quecksilberhochdrucklampe bei Temperaturen zwischen 40 und 80 °C oder andern Lampen mit hohen UV-C-Anteilen.

Die oben erwähnten Verfahren können zur Abscheidung verschiedener Metalle auf das gleiche Halbleiterpulver verwendet werden, wobei die verschiedenen Methoden in an sich beliebiger Reihenfolge hintereinander angewendet werden können. So können die verschiedenen Metalle gleichzeitig z. B. photokatalytisch, elektrolytisch oder hydrogenolytisch oder hintereinander in an sich beliebiger Reihenfolge photokatalytisch, elektrolytisch und hydrogenolytisch abgeschieden werden.

Bei den genannten Verfahren kann mit Vorteil auch unter Zusatz von Säure oder Salzen davon in wässrigem Medium vorbehandeltes und mit Lichtquellen mit einem hohen UV-C-Anteil belichtetes Cadmiumsulfid- oder Cadmiumsulfoselenid eingesetzt werden, oder die nach den genannten Verfahren mit Metallen beschichteten Cadmiumsulfid- oder Cadmiumsulfoselenid-Halbleiterpulver werden vorzugsweise einer Nachbehandlung unterzogen, indem man sie unter Zusatz von Säure oder Salzen davon in wässrigem Medium suspendiert und erneut mit Licht, das hohe UV-C-Anteile aufweist, bestrahlt. Der pH des wässrigen Mediums liegt dabei zweckmässig zwischen etwa 1,0 und 9,0, wobei zur Einstellung des gewünschten pH-Wertes mit Vorteil Puffer mitverwendet werden, wie Natrium- und Kaliumacetat oder Natriumformiat. Als Säuren oder Salze davon eignen sich beispielsweise solche der unter 1) genannten Art.

Vor der Metallabscheidung können die Halbleiterpulver nötigenfalls reduktiv gereinigt werden. Bevorzugt ist die Katalysatorherstellung gemäss Verfahren 1), 3), 4) und 6), besonders gemäss Verfahren 1) und 3), wobei Cadmiumsulfid- oder Cadmiumsulfoselenid-Halbleiterpulver vorzugsweise wie oben beschrieben unter Zusatz von Säure oder Salzen davon in wässrigem Medium nachbehandelt und erneut bestrahlt werden.

Für die obigen Umsetzungen 1-4 und 6 kommen als Metallverbindungen vor allem einfache und komplexe Salze, besonders Ammonium- und Alkalihexa- oder -tetrahalogen-metallate, ferner Halogenide, Nitrate, Acetate und Cyanide in Betracht. Geeignete Metallverbindungen sind beispielsweise Hexachlorplatinsäure [Platin(IV)chlorwasserstoffsäure], Hexabromplatinsäure, deren Hydrate und Salze, wie Ammonium-hexachloroplatinat(IV) ; Ammonium-tetrachloroplatinat(II), Platin(IV)bromid, Platin(II)chlorid, Platin(IV)chlorid, Kaliumtetrachlorplatinat(II) ; Iridium(III)chlorid, Iridium(IV)chlorwasserstoffsäure-Hexahydrat, Ammonium-hexachloroiridat(IV) ; Gold(III)chlorid, -bromid und -jodid, Gold(I)cyanid und -acetat ; Palladiumchlorid oder -jodid, Palladiumacetat, -cyanid und -nitrat ; Ruthenium(III)chlorid-hydrat ; Silberacetat und -nitrat ; Rhodiumacetat, Rhodiumchlorid, Hexachloroosmat und Salze davon ; Nickelchlorid, Nickelacetat, Chromchlorid, Kobaltchlorid, Kobaltacetat, Kupferchlorid und Kupferacetat. Bevorzugt sind Hexachloroplatinsäurehydrat, Rhodium(III)chlorid, Nickel(II)chlorid, Ammoniumhexachloroosmat, Ruthenium(III)chlorid-hydrat, Mischungen von Nickel(II)chlorid/Rhodium(III)chlorid und Mischungen von Silbeacetat/Hexachloroplatinsäurehydrat.

Besonders bevorzugt ist Hexachloroplatinsäurehydrat.

Die im erfindungsgemässen Verfahren einzusetzenden Katalysatoren sind neu, mit Ausnahme der gemäss JACS, *100*, 4317 (1978) oder J. Phys. Chem., *84*, 1705 (1980) oder US-PS 4 264 421 beschichteten Titandioxidpulver. Gegenstand der Erfindung sind somit auch neue, mindestens teilweise mit Cu, Cr, Ni, Co oder Edelmetallen oder Gemischen davon beschichtete Cadmiumsulfid- und Cadmiumsulfoselenid-Halbleiterpulver. Bevorzugt sind mindestens teilweise mit Rhodium, Nickel, Osmium, Ruthenium-, Nickel/Rhodium- oder Silber/Platingemischen beschichtete Cadmiumsulfoselenid-Halbleiterpulver und insbesondere Cadmiumsulfid-Halbleiterpulver. Besonders bevorzugt sind mindestens teilweise mit Platin beschichtete Cadmiumsulfid- und Cadmiumsulfoselenid-Halbleiterpulver. Im übrigen gelten die vorangehend bei der Erläuterung des Verfahrens genannten Bevorzugungen.

## Beispiel 1

### mit Platin beschichtetes Cadmiumsulfid

0,25 g Hexachlorplatinsäurehydrat (entsprechend 0,1 g Platingehalt) werden in 3 ml 1N HC1 gelöst und mit destilliertem Wasser auf ein Volumen von 80 ml ergänzt. Durch tropfenweise Zugabe von konzentrierter wässriger NaOH-Lösung wird die entstandene gelbe Lösung neutralisiert und dann mit Essigsäure auf pH 4 gestellt. In dieser Lösung werden 10 g Cadmiumsulfid (elektronische Qualität ; spezifische Oberfläche 0,25 m$^2$/g) aufgeschlämmt, und die Lösung wird während 30 Minuten bei 60 °C mit Stickstoff entgast. Anschliessend belichtet man während 30 Minuten bei 60 °C in einem Photoreaktor, der mit einem wassergekühlten Tauchrohr aus Quarzglas und einer 150 W Quecksilberhochdrucklampe aufgerüstet ist. Die erhaltene grüngraue Suspension wird abfiltriert, mit destilliertem Wasser nachgewaschen und bei 120 °C/13 000 Pa getrocknet. Platingehalt 0,8 Gew.-%.

## Beispiel 2

### mit Platin beschichtetes Cadmiumsulfid

2 g Hexachloroplatinsäurehydrat (entsprechend 0,5 g Platingehalt) werden in 12 ml verdünnter HCl gelöst dann zu 49,5 g Cadiumsulfid (elektronische Qualität ; spezifische Oberfläche 0,25 m$^2$/g) gegeben und gut vermischt. Die so erhaltene imprägnierte Substanz wird während 2,5 Stunden bei 80 °C/2 000-2 700 Pa und dann während weiterer 2,5 Stunden bei 150-160 °C in einem Heizexsiccator getrocknet. Anschliessend wird das Produkt während 3 Stunden bei 200 °C im drehenden 250 ml-Kolben eines Rotationsverdampfers mit einem H$_2$-Strom behandelt. Man erhält mit Platin beschichtetes CdS in Form eines grünlichen Pulvers ; Platingehalt 1 Gew.-%.

## Beispiele 3-10

### mit Platin beschichtetes TiO$_2$

Beispiel 3 : Es wird wie in Beispiel 1 beschrieben vorgegangen, jedoch unter Verwendung von 10 g TiO$_2$ (Anatas ; spezifische Oberfläche 8 m$^2$/g) und mit 6-stündiger Belichtung. Nach der Aufarbeitung erhält man ein gräuliches Pulver mit einem Platingehalt von 0,84 Gew.-%.

## Beispiel 4

Beispiel 3 wird wiederholt, jedoch unter Verwendung von 0,05 g Hexachloroplatinsäurehydrat. Man

5

erhält mit Platin beschichtetes $TiO_2$ als leicht gräuliches Pulver mit einem Platingehalt von 0,17 Gew.-%.

### Beispiel 5

Beispiel 3 wird wiederholt, jedoch unter Verwendung von 0,012 5 g Hexachloroplatinsäurehydrat. Man erhält platinbeschichtetes $TiO_2$ als schwach gräuliches Pulver mit einem Platingehalt von 0,044 Gew.-%.

### Beispiel 6

Beispiel 3 wird wiederholt, jedoch unter Verwendung von 2,5 g Hexachloroplatinsäurehydrat. Man erhält ein dunkelgraues Pulver mit 6,92 Gew.-% Pt.

### Beispiel 7

Beispiel 3 wird wiederholt, jedoch unter Verwendung von 10 g der Rutil-Modifikation von $TiO_2$ (spezifische Oberfläche 8 $m^2$/g). Man erhält ein analoges Produkt.

### Beispiel 8

Zu einer Lösung von 2 g Hexachloroplatinsäurehydrat (entsprechend 0,8 g Platin) in 12 ml verdünnter Salzsäure gibt man 49,5 g $TiO_2$ (Anatas, spezifische Oberfläche 8 $m^2$/g) und mischt sorgfältig. Die so erhaltene imprägnierte Substanz wird zuerst während 2,5 Stunden bei 80 °C/2 000-2 700 Pa und dann während 2,5 Stunden bei 150-160 °C in einem Heizexsiccator getrocknet. Die Reduktion im $H_2$-Strom wird während 3 Stunden bei 200 °C im drehenden Kolben (250 ml) eines Rotationsverdampfers durchgeführt. Man erhält ein gräuliches Pulver mit einem Platingehalt von 1 Gew.-%.

### Beispiel 9

Beispiel 8 wird wiederholt, jedoch unter Verwendung von 0,013 g Hexachloroplatinsäurehydrat. Man erhält mit Platin beschichtetes $TiO_2$ mit einem Platingehalt von 0,05 Gew.-%.

### Beispiel 10

Beispiel 3 wird wiederholt, jedoch unter Verwendung von 0,25 g Hexachloroplatinsäurehydrat und Titandioxid (Anatas) mit einer spezifischen Oberfläche von 10 $m^2$/g. Man erhält platinbeschichtetes $TiO_2$ mit einem Platingehalt von 1 Gew.-%.

### Beispiel 11

mit Gold beschichtetes Cadmiumsulfid

Cadmiumsulfid gleicher Qualität und mit einer spezifischen Oberfläche wie in Beispiel 1 angegeben wird nach den in den Beispielen 1 und 2 beschriebenen Methoden mit Gold beschichtet, wobei 0,3 g Gold(III)-chlorid verwendet werden. Der Goldgehalt des erhaltenen grüngelben Pulvers liegt bei 1,33 Gew.-%.

### Beispiel 12

mit Gold beschichtetes $TiO_2$

$TiO_2$ (Anatas, spezifische Oberfläche 8 $m^2$/g) wird nach der in Beispiel 3 beschriebenen Methode mit Gold beschichtet [0,208 g Gold(III)-chlorid]. Man erhält ein gelbliches Pulver mit einem Goldgehalt von 1,0 Gew.-%.

### Beispiel 13

10 g $TiO_2$ (Anatas, spezifische Oberfläche 10 $m^2$/g) werden mit 0,2 g Hexachloroplatinsäurehydrat (ca. 40 Gew.-% Pt) in 90 ml Wasser bei 60 °C in einem Photoreaktor, der mit einer 125 Watt Quecksilberhochdrucklampe in einem Tauchschacht aus Quarz ausgerüstet ist, eine halbe Stunde mit Stickstoff entgast und anschliessend unter leichtem Stickstoffstrom bei dieser Temperatur während 5 Stunden belichtet. Dabei wird die ursprünglich weisse Suspension langsam grau. Diese wird abfiltriert, mit Wasser gewaschen und im Trockenschrank bei 120 °C während 24 Stunden getrocknet. Man erhält 9,03 g eines grauen Pulvers, das 0,6 Gew.-% Pt enthält.

**0 058 136**

Beispiel 14

mit Platin beschichtetes Cadmiumsulfid

0,4 g Hexachloroplatinsäurehydrat (0,16 g Platingehalt) werden in 77,3 ml Wasser und 6 ml 0,1 N Salzsäure gelöst und mit konzentrierter NaOH-Lösung auf pH 7 gestellt. Man versetzt mit 2,0 g Kaliumacetat und 5 ml einer 5 %igen wässrigen Lösung von Cd(NO$_3$)$_2$ · 4 H$_2$O und stellt den pH mit 1,7 ml 96 %iger Essigsäure auf 4,5. Dann gibt man 10 g CdS (elektronische Qualität, spezifische Oberfläche 0,64 m$^2$/g) zu, entgast die Suspension während 30 Minuten bei 60 °C und belichtet anschliessend 30 Minuten lang mit einer 125 W Quecksilberhochdrucklampe durch einen wassergekühlten Quarzfinger. Die erhaltenen grüngraue Suspension wird abfiltriert, mit destilliertem Wasser nachgewaschen und im Trockenschrank bei 60 °C/13 000 Pa getrocknet. Platingehalt 1,1 Gew.-%.

Beispiel 15

Beispiel 14 wird wiederholt unter Verwendung von 10 g Cadmiumsulfoselenid (60 Mol.% CdSe ; spez. Oberfläche 1,5 m$^2$/g). Das erhaltene gelbgrüne Pulver weist einen Pt-Gehalt von 1,2 Gew.-% auf.

Beispiel 16

82,3 ml Wasser und 6 ml 0,1 N Salzsäure werden mit konzentrierter wässriger NaOH-Lösung auf pH 7 gestellt, mit 2,0 g Kaliumacetat versetzt und mit 1,7 ml 96 %iger Essigsäure auf pH 4,5 gestellt. Dann gibt man 10 g des gemäss Beispiel 2 erhaltenen mit Platin beschichteten Cadmiumsulfids zu. Die Suspension wird 30 Minuten bei 60 °C mit Argon entgast und anschliessend 30 Minuten mit einer 125 W Quecksilberhochdrucklampe durch einen wassergekühlten Quarzfinger bestrahlt. Die erhaltene graugrüne Suspension wird abfiltriert, mit destilliertem Wasser nachgewaschen und im Trockenschrank bei 60 °C/13 000 Pa getrocknet. Platingehalt des erhaltenens Pulvers : 1,0 Gew.-%.

Beispiel 17

82,3 ml Wasser und 6 ml 0,1 N Salzsäure werden mit konzentrierter wässriger NaOH-Lösung auf pH 7 gestellt und mit 3,7 g Chloressigsäure versetzt. Dann wird die Lösung mit 1 N wässriger NaOH-Lösung auf pH 3,0 eingestellt. Man gibt 10 g eines analog Beispiel 2 hergestellten mit Platin beschichteten Cadmiumsulfids zu (Pt-Gehalt 1 Gew.-%), entgast die Suspension 30 Minuten mit einer 125 W Quecksilberhochdrucklampe durch einen wassergekühlten Quarztauchfinger. Die erhaltene grüngraue Suspension wird abfiltriert, mit destilliertem Wasser gewaschen und im Trockenschrank bei 60 °C/13 000 Pa getrocknet. Platingehalt des erhaltenen Pulvers 1,0 Gew.-%.

Beispiel 18

Beispiel 17 wird wiederholt, jedoch unter Verwendung von 3,7 g Glykolsäure anstelle von Chloressigsäure. Die Lösung wird mit 1 N wässriger NaOH-Lösung auf pH 3,5 eingestellt. Platingehalt des erhaltenen Pulvers 1,0 Gew.-%.

Beispiel 19

Beispiel 16 wird wiederholt, jedoch unter Verwendung von 1,7 ml Ameisensäure und 2 g Natriumformiat anstelle von Essigsäure und Kaliumacetat. Dabei ergibt sich ein pH von 3,8. Platingehalt des erhaltenen Pulvers 1,0 Gew.-%.

Beispiel 20

mit Palladium beschichtetes Cadmiumsulfid

Beispiel 14 wird wiederholt, jedoch unter Verwendung von 0,4 g Palladiumacetat anstelle von Hexachloroplatinsäurehydrat. Man erhält ein braunschwarzes Pulver mit einem Pd-Gehalt von 2,0 Gew.-%.

Beispiel 21

mit Silber beschichtetes Camiumsulfid

0,4 g Silbernitrat werden in 77,3 ml Wasser gelöst, mit 2 g Kaliumacetat versetzt und mit Essigsäure auf pH 4,5 gestellt. Die weitere Behandlung erfolgt wie in Beispiel 14 beschrieben. Man erhält ein grüngraues Pulver mit einem Silbergehalt von 2,6 Gew.-%.

7

### Beispiel 22

mit Rhodium beschichtetes Cadmiumsulfid

0,8 g Rhodium(III)chlorid werden in 20 ml Wasser gelöst. Dann gibt man 10 g Cadmiumsulfid (elektronische Qualität, spezifische Oberfläche 0,64 m$^2$/g) zu und vermischt gut. Das Wasser wird bei 80 °C am Wasserstrahlvakuum abgezogen, und die erhaltene imprägnierte Substanz wird 2 Stunden im Heizexsiccator bei 60 °C getrocknet. Anschliessend wird das Produkt während 2 Stunden bei 200 °C in einem Quarzrohr mit einem H$_2$-Strom behandelt. Man erhält mit Rhodium beschichtetes Cadmiumsulfid in Form eines grünschwarzen Pulvers ; Rh-Gehalt 4 Gew.-%.

### Beispiel 23

mit Iridium beschichtetes Cadmiumsulfid

Beispiel 22 wird wiederholt, jedoch unter Verwendung von 0,8 g Iridium(III)chlorid. Man erhält mit Iridium beschichtetes Cadmiumsulfid in Form eines schwarzen Pulvers ; Ir-Gehalt 4 Gew.-%.

### Beispiel 24

mit Nickel beschichtetes Cadmiumsulfid

Beispiel 22 wird wiederholt, jedoch unter Verwendung von 0,8 g Nickel(II)chlorid und Behandlung mit einem H$_2$-Strom bei 300 °C. Man erhält mit Nickel beschichtetes Cadmiumsulfid in Form eines schwarzgrünen Pulvers ; Ni-Gehalt 1,15 Gew.-%.

### Beispiel 25

mit Silber beschichtetes Cadmiumsulfid

Beispiel 22 wird wiederholt, jedoch unter Verwendung von 0,8 g Silbernitrat. Man erhält mit Silber beschichtetes Cadmiumsulfid in Form eines schwarz-grünen Pulvers ; Ag-Gehalt 6,7 Gew.-%.

### Beispiel 26

mit Osmium beschichtetes Cadmiumsulfid

Beispiel 22 wird wiederholt, jedoch unter Verwendung von 0,8 g Ammoniumhexachloro-osmat. Man erhält mit Osmium beschichtetes Cadmiumsulfid in Form eines schwarz-grünen Pulvers ; Osmiumgehalt 5 Gew.-%.

### Beispiel 27

mit Ruthenium beschichtetes Cadmiumsulfid

Beispiel 22 wird wiederholt, jedoch unter Verwendung von 0,8 g Ruthenium(III)chlorid. Man erhält mit Ruthenium beschichtetes Cadmiumsulfid in Form eines schwarz-grünen Pulvers ; Rutheniumgehalt 4,5 Gew.-%.

Die gemäss den Beispielen 22 bis 27 erhaltenen beschichteten Cadmiumsulfid-Pulver werden anschliessend wie in Beispiel 16 beschrieben nachbehandelt.

### Beispiel 28

mit Nickel und Rhodium beschichtetes Cadmiumsulfid

Beispiel 22 wird wiederholt, jedoch unter Verwendung eines Gemisches von 0,1 g Rhodium(III)chlorid und 0,7 g Nickel(II)chlorid und einer Reaktionstemperatur von 300 °C. Man erhält mit Nickel und Rhodium beschichtetes Camiumsulfid in Form eines schwarz-grünen Pulvers ; Nickelgehalt 1,2 Gew.-% ; Rhodiumgehalt 0,5 Gew.-%.

### Beispiel 29

20 g des gemäss Beispiel 25 erhaltenen mit 6,7 Gew.-% Silber beschichteten Cadmiumsulfids werden analog den Bedingungen von Beispiel 14 mit Platin beschichtet ; Pt-Gehalt 0,5 Gew.-%.

## Beispiel 30

10 g Cadmiumsulfid (elektronische Qualität, spez. Oberfläche 0,64 m²/g) werden analog Beispiel 16 behandelt. Man erhält ein gelbes Pulver mit einer spezifischen Oberfläche von 1,2 m²/g. Dieses Pulver wird anschliessend analog Beispiel 14 mit Platin beschichtet. Man erhält mit Platin beschichtetes Cadmiumsulfid in Form eines grünen Pulvers ; Platingehalt 1,0 Gew.-%.

## Beispiel 31

Photochemische Produktion von Wasserstoff aus Wasser unter gleichzeitiger Oxidation von Sulfit

0,4 g des gemäss Beispiel 1 hergestellten platinbeschichteten Cadmiumsulfids (0,8 Gew.-% Pt) werden in 80 ml einer 10 %igen wässrigen Natriumsulfitlösung aufgeschlämmt und während 45 Minuten bei 60 °C mit Stickstoff entgast. Dann wird die erhaltene Suspension bei 60 °C in einem Photororeaktor, der mit einem Tauchfinger aus Pyrexglas und einer 125 W Quecksilberhochdrucklampe ausgestattet ist, bestrahlt. Das entwickelte Gas wird in einem Gasometer abgefangen. Innerhalb von 24 Stunden entwickeln sich 1 130 ml Gas (47 ml/h). Ohne Licht kann keine $H_2$-Entwicklung festgestellt werden.

Die quantitative Bestimmung des Wasserstoffs wird wie folgt durchgeführt : 700 ml des erhaltenen Gases werden bei Raumtemperatur (20-25 °C) zur Hydrierung einer Lösung von 3,0 g Nitrobenzol in 15 ml Methanol mit 0,3 g eines Pd-Kohlekatalysators (5 Gew.-% Pd) verwendet. Nach 30 Stunden ist die Wasserstoffaufnahme (≃ 660 ml) beendet. Nach dem Abfiltrieren des Katalysators und dem Eindampfen des Lösungsmittels wird das zurückbleibende gelbe Oel als Gemisch aus 68,6 Gew.-% Nitrobenzol und 31,4 Gew.-% Anilin bestimmt. Daraus berechnet sich ein Wasserstoffverbrauch von 665 ml (bei Normaldruck und 20 °C).

Der entwickelte Wasserstoff war also > 90 %ig. Gemäss gaschromatographischer Analyse besteht der Rest des Gases aus Stickstoff, der aus der vorgängigen Entgasung des Totvolumens stammt.

Die quantitative Bestimmung des restlichen Sulfits wird wie folgt durchgeführt : Die Sulfitlösung wird nach der Belichtung vom platinbeschichteten Camiumsulfid abfiltriert, mit einem Ueberschuss 0,1 N Jodlösung versetzt und anschliessend mit 0,1 N Natriumthiosulfat-Lösung mit Stärke als Indikator zurücktitriert. Gegenüber einer Blindprobe (10 %ige Natriumsulfitlösung, 24 Stunden bei 60 °C, entgast) wird ein Verbrauch von 0,054 Mol Sulfit festgestellt. Dies entspricht einer äquimolaren Menge von 1 301 ml Wasserstoff (Normaldruck und 20 °C) und deckt sich etwa mit den oben bei der Wasserstoffbestimmung angegebenen Werten.

## Beispiele 32-65

Die folgenden Beispiele illustrieren die Verwendung weiterer definitionsgemässer Halbleiterpulver zur Herstellung von Wasserstoff. Es wurden jeweils 80 ml einer 5 %igen wässrigen Natriumsulfitlösung eingesetzt. Die restlichen Reaktionsbedingungen und die Resultate sind in der folgenden Tabelle zusammengefasst.

(Siehe Tabelle, Seite 10 ff.)

Tabelle

| Bei-spiel Nr. | Katalysator | Reaktions-temperatur °C | Lichtquelle/Filter | $H_2$-Ent-wicklung | Bemerkungen |
|---|---|---|---|---|---|
| 32 | 0,4 g CdS/0,8 Gew.% Pt gemäss Bsp. 1 | 60 | 125 W Hg-Hochdrucklampe mit Filter mit einer Lichtdurchlässigkeit > 260 nm | 80 ml/h | während 45 Min. entgast |
| 33 | 0,7 g CdS/0,8 Gew.% Pt gemäss Bsp. 1 | 60 | do. | 110 ml/h | do. |
| 34 | 0,4 g CdS/0,8 Gew.% Pt gemäss Bsp. 1 | 60 | 125 W Hg-Hochdrucklampe 5 Gew.% $NaNO_2$ in $H_2O$ als Filterlösung (Lichtdurch-lässigkeit >400 nm) | 30 ml/h | während 45 Min. entgast, Lampen-output durch cut-off bei 400 nm um 50 % reduziert |
| 35 | do. | 40 | 125 W Hg-Hochdrucklampe mit Filter gemäss Bei-spiel 32 | 39,5 ml/h | während 45 Min. entgast |
| 36 | do. | 20 | do. | 18 ml/h | do. |
| 37 | do. | 60 | do. | 72 ml/h | nicht entgast |
| 38 | 0,4 g CdS/1 Gew.% Pt gemäss Bsp. 2 | 60 | do. | 16 ml/h | während 45 Min. entgast |

0 058 136

Tabelle (Fortsetzung)

| Bei-spiel Nr. | Katalysator | Reaktions-temperatur °C | Lichtquelle/Filter | $H_2$-Ent-wicklung | Bemerkungen |
|---|---|---|---|---|---|
| 39 | 0,4 g CdS/1,33 Gew.% Au gemäss Bsp. 11 | 60 | 125 W Hg-Hochdrucklampe mit Filter gemäss Bei-spiel 32 | 29 ml/h | während 45 Min. entgast |
| 40 | 0,4 $TiO_2$/0,84 Gew.% Pt gemäss Bsp. 3 | 60 | do. | 12 ml/h | do. |
| 41 | 0,4 g $TiO_2$/0,044 Gew.% Pt gemäss Bsp. 5 | 60 | do. | 14 ml/h | do. |
| 42 | 0,4 g $TiO_2$/1 Gew.% Pt gemäss Bsp. 8 | 60 | do. | 16,5 ml/h | do. |
| 43 | 0,4 g $TiO_2$/1 Gew.% Au gemäss Bsp. 12 | 60 | do. | 2,5 ml/h | do. |
| 44 | 0,4 g $TiO_2$/0,17 Gew.% Pt gemäss Bsp. 4 | 60 | do. | 8,6 ml/h | do. |
| 45 | 0,4 g $TiO_2$/6,92 Gew.% Pt gemäss Bsp. 6 | 60 | do | 21,1 ml/h | do. |

## Tabelle (Fortsetzung)

| Beispiel Nr. | Katalysator | Reaktions-temperatur °C | Lichtquelle/Filter | H$_2$-Ent-wicklung | Bemerkungen |
|---|---|---|---|---|---|
| 46 | 0,4 TiO$_2$/0,05 Gew.% Pt gemäss Bsp. 9 | 60 | 125 W Hg-Hochdrucklampe mit Filter gemäss Beispiel 32 | 7,5 ml/h | während 45 Min. entgast |
| 47 | 0,4 g TiO$_2$/1 Gew.% Pt gemäss Bsp. 10 | 60 | do. | 35 ml/h | do. |
| 48 | 0,4 g TiO$_2$/0,6 Gew.% Pt gemäss Bsp. 13 | 60 | 125 W Hg-Hochdrucklampe mit Filter mit einer Lichtdurchlässigkeit > 300 nm | 52,5 ml/h | do. |
| 49 | 0,4 g CdS/1,1 Gew.% Pt gemäss Bsp. 14 | 60 | 125 W Hg-Hochdrucklampe mit Pyrexfilter; Licht-durchlässigkeit > 300 nm | 46 ml/h | |
| 50 | 0,4 g Cd(S,Se)/ 1,2 Gew.% Pt gemäss Bsp. 15 | 60 | do. | 4,5 ml/h | |
| 51 | 0,4 g CdS/1,0 Gew.% Pt gemäss Bsp. 16 | 60 | do. | 82 ml/h | |
| 52 | 0,4 g CdS/1,0 Gew.% Pt gemäss Bsp. 17 | 60 | do. | 82 ml/h | |

0 058 136

Tabelle (Fortsetzung)

| Beispiel Nr. | Katalysator | Reaktions-temperatur °C | Lichtquelle/Filter | $H_2$-Ent-wicklung | Bemerkungen |
|---|---|---|---|---|---|
| 53 | 0,4 g CdS/1,0 Gew.% Pt gemäss Bsp. 18 | 60 | 125 W Hg-Hochdrucklampe mit Pyrexfilter; Licht-durchlässigkeit ➤300 nm | 69 ml/h | |
| 54 | 0,4 g CdS/1,0 Gew.% Pt gemäss Bsp. 19 | 60 | " | 54 ml/h | |
| 55 | 0,4 g CdS/2,0 Gew.% Pd gemäss Bsp. 20 | 60 | " | 24 ml/h | |
| 56 | 0,4 g CdS/2,6 Gew.% Ag gemäss Bsp. 21 | 60 | " | 14 ml/h | |
| 57 | 0,4 g CdS/4 Gew.% Rh gemäss Beispiel 22 | 60 | " | 58 ml/h | analog Beispiel 16 nachbe-handeltes beschichtetes CdS |
| 58 | 0,4 g CdS/ 4 Gew.% Ir gemäss Bsp. 23 | 60 | " | 18 ml/h | " |
| 59 | 0,4 g CdS/1,15 Gew.% Ni gemäss Bsp. 24 | 60 | " | 27 ml/h | " |
| 60 | 0,4 g CdS/6,7 Gew.% Ag gemäss Beispiel 25 | 60 | " | 21 ml/h | " |

0 058 136

Tabelle (Fortsetzung)

| Beispiel Nr. | Katalysator | Reaktions- temperatur °C | Lichtquelle/Filter | $H_2$-Ent- wicklung | Bemerkungen |
|---|---|---|---|---|---|
| 61 | 0,4 g CdS/ 5 Gew.% Os gemäss Beispiel 26 | 60 | 125 W Hg-Hochdrucklampe mit Pyrexfilter; Licht- durchlässigkeit > 300 nm | 36 ml/h | analog Beispiel 16 nachbe- handeltes beschichtetes CdS |
| 62 | 0,4 g CdS/4,5 Gew.% Ru gemäss Beispiel 27 | 60 | " | 61 ml/h | " |
| 63 | 0,4 g CdS/6,7 Gew.% Ag, 0,5 Gew.% Pt gemäss Bsp. 29 | 60 | " | 31 ml/h | |
| 64 | 0,4 g CdS/1,2 Gew.% Ni, 0,5 Gew.% Rh gemäss Beispiel 28 | 60 | " | 33 ml/h | |
| 65 | 0,4 g CdS/1,0 Gew.% Pt gemäss Bsp. 30 | 60 | " | 20 ml/h | |

0 058 136

14

# 0 058 136

## Beispiel 66

Analog Beispiel 31 werden je 0,4 g eines gemäss Beispiel 1 und eines gemäss Beispiel 2 mit Platin beschichteten Cadmiumsulfids (Platingehalt 1 Gew.-%) in 80 ml einer 2 %igen wässrigen Lösung von $Na_2S \cdot 8 H_2O$ aufgeschlämmt und mit Stickstoff entgast. Darauf werden die erhaltenen Suspensionen wie in Beispiel 31 beschrieben bestrahlt (> 300 nm). Die quantitative Bestimmung des gebildeten Wasserstoffs erfolgt ebenfalls wie in Beispiel 31 beschrieben. Wasserstoffentwicklung : je 30 ml/h.

## Ansprüche

1. Verfahren zur selektiven Produktion von Wasserstoff mittels heterogener Photoredoxkatalyse, dadurch gekennzeichnet, dass man in der Suspension eines mindestens teilweise mit Cu, Cr, Ni, Co oder einem Edelmetall oder Gemischen davon beschichteten Cadmiumsulfid-, Cadmiumsulfoselenid- oder Titandioxid-Halbleiterpulvers Gemische aus Wasser und Alkalimetall-, Erdalkalimetall- oder Ammoniumsulfiten oder -sulfiden unter Lichteinwirkung zur Reaktion bringt.

2. Verfahren nach Anspruch 1, dadurch gekennzeichnet, dass man als Suspensionsmittel Wasser verwendet.

3. Verfahren nach Anspruch 1, dadurch gekennzeichnet, dass man ein Alkalimetallsulfit oder -sulfid, Ammoniumsulfit oder -sulfid verwendet.

4. Verfahren nach Anspruch 1, dadurch gekennzeichnet, dass man Natrium- oder Ammoniumsulfit verwendet.

5. Verfahren nach Anspruch 1, dadurch gekennzeichnet, dass man die Reaktion zwischen 20 °C und dem Siedepunkt des verwendeten Suspensionsmittels durchführt.

6. Verfahren nach Anspruch 1, dadurch gekennzeichnet, dass man die mit den Metallen beschichteten definitionsgemässen Halbleiterpulver in einer Menge von 0,05 bis 8 Gew.-%, bezogen auf das Reaktionsvolumen, einsetzt.

7. Verfahren nach Anspruch 1, dadurch gekennzeichnet, dass man mindestens teilweise mit Rhodium, Nickel, Osmium, Ruthenium, Nickel/Rhodium- oder Silber/Platingemischen beschichtete Cadmiumsulfoselenid- oder Titandioxid-Halbleiterpulver (Anatas-Modifikation) und insbesondere Cadmiumsulfid-Halbleiterpulver verwendet.

8. Verfahren nach Anspruch 1, dadurch gekennzeichnet, dass man mindestens teilweise mit Platin beschichtetes Cadmiumsulfid-, Cadmiumsulfoselenid- oder Titandioxid-Halbleiterpulver (Anatas-Modifikation) verwendet.

9. Verfahren zur Herstellung von mindestens teilweise mit Cu, Cr, Ni, Co oder einem Edelmetall oder Gemischen davon beschichteten Cadmiumsulfid- oder Cadmiumsulfoselenid-Halbleiterpulvern, dadurch gekennzeichnet, dass man das Cadmiumsulfid- oder Cadmiumsulfoselenid- Halbleiterpulver unter Zusatz von Säure oder einem Salz davon in einer wässrigen Lösung oder Suspension einer entsprechenden Metallverbindung oder eines Gemisches entsprechender Metallverbindungen suspendiert und dann belichtet, wobei Lichtquellen mit hohem UV-C-Anteil eingesetzt werden.

10. Verfahren zur Herstellung von mindestens teilweise mit Cu, Cr, Ni, Co oder einem Edelmetall oder Gemischen davon beschichteten Cadmiumsulfid-, Cadmiumsulfoselenid- oder Titandioxid-Halbleiterpulvern, dadurch gekennzeichnet, dass man das Cadmiumsulfid-, Cadmiumsulfoselenid- oder Titandioxid-Halbleiterpulver mit einer wässrigen Lösung einer entsprechenden Metallverbindung oder eines Gemisches entsprechender Metallverbindungen imprägniert, gegebenenfalls unter Zusatz von Säure, anschliessend bei erhöhter Teperatur trocknet und die Metallverbindung mit $H_2$ reduziert.

11. Verfahren nach Anspruch 9 oder 10, dadurch gekennzeichnet, dass man unter Zusatz von Säure oder Salzen davon in wässrigem Medium vorbehandeltes und mit Lichtquellen mit einem hohen UV-C-Anteil belichtetes Cadmiumsulfid oder Cadmiumsulfoselenid verwendet.

12. Verfahren nach Anspruch 9 oder 10, dadurch gekennzeichnet, dass man das mit Cu, Cr, Ni, Co oder einem Edelmetall oder Gemischen davon beschichtete Cadmiumsulfid- oder Cadmiumsulfoselenid-Halbleiterpulver einer Nachbehandlung unterzieht, indem man es unter Zusatz von Säure oder Salzen davon in wässrigem Medium suspendiert und erneut mit Licht, das hohe UV-C-Anteile aufweist, bestrahlt.

13. Mindestens teilweise mit Cu, Cr, Ni, Co oder einem Edelmetall oder Gemischen davon beschichtete Cadmiumsulfid- und Cadmiumsulfoselenid-Halbleiterpulver.

14. Mindestens teilweise mit Rhodium, Nickel, Osmium, Ruthenium, Nickel/Rhodium- oder Silber/Platingemischen beschichtete Cadmiumsulfoselenid-Halbleiterpulver und insbesondere Cadmiumsulfid-Halbleiterpulver gemäss Anspruch 13.

15. Mindestens teilweise mit Platin beschichtete Cadmiumsulfid- oder Cadmiumsulfoselenid-Halbleiterpulver gemäss Anspruch 13.

## Claims

1. A process for the selective production of hydrogen by means of heterogeneous photoredox catalysis, which comprises reacting mixtures of water and alkali metal sulfites or sulfides, alkaline earth metal sulfites or sulfides or ammonium sulfites or sulfides under the action of light in a suspension of a cadmium sulfide, cadmium sulfoselenide or titanium dioxide/semiconductor powder which is at least partially coated with Cu, Cr, Ni, Co or a noble metal or mixtures thereof.

2. A process according to claim 1, wherein water is used as the suspending agent.

3. A process according to claim 1, wherein an alkali metal sulfite or sulfide or ammonium sulfite or sulfide is used.

4. A process according to claim 1, wherein sodium sulfite or ammonium sulfite is used.

5. A process according to claim 1, wherein the reaction is carried out at a temperature between 20 °C and the boiling point of the suspending agent used.

6. A process according to claim 1, wherein the semiconductor powders, of the type defined, which have been coated with the metals, are employed in an amount of 0.05 to 8 % by weight, relative to the volume of the reaction.

7. A process according to claim 1, wherein cadmium sulfoselenide/semiconductor or titanium dioxide (anatase modification)/semiconductor powders and, in particular, cadmium sulfide/semiconductor powders which are at least partially coated with rhodium, nickel, osmium, ruthenium or nickel/rhodium or silver/platinum mixtures, are used.

8. A process according to claim 1, wherein a cadmium sulfide/semiconductor, cadmium sulfoselenide/semiconductor or titanium dioxide (anatase modification)/semiconductor powder which is at least partially coated with platinum, is used.

9. A process for the preparation of cadmium sulfide/semi-conductor or cadmium sulfoselenide/semiconductor powders which are at least partially coated with Cu, Cr, Ni, Co or a noble metal or mixtures thereof, which comprises suspending the cadmium sulfide/semiconductor or cadmium sulfoselenide/semiconductor powder in an aqueous solution or suspension of a corresponding metal compound or a mixture of corresponding metal compounds, with the addition of an acid or a salt thereof, and then exposing the solution or suspension to light, light sources having a high UV-C content being employed.

10. A process for the preparation of cadmium sulfide/semiconductor, cadmium sulfoselenide/semiconductor or titanium dioxide/semiconductor powders which are at least partially coated with Cu, Cr, Ni, Co or a noble metal or mixtures thereof, wherein the cadmium sulfide/semiconductor, cadmium sulfoselenide/semiconductor or titanium dioxide/semiconductor powder is impregnated with an aqueous solution of a corresponding metal compound or a mixture of corresponding metal compounds, if desired with the addition of an acid, the product is then dried at elevated temperature and the metal compound is reduced with $H_2$.

11. A process according to either of claims 9 or 10, wherein cadmium sulfide or cadmium sulfoselenide which has been pretreated in an aqueous medium with the addition of an acid or salts thereof and has been exposed to sources of light having a high UV-C content, is used.

12. A process according to either of claims 9 or 10, wherein the cadmium sulfide or cadmium sulfoselenide/semiconductor powder which is coated with Cu, Cr, Ni, Co or a noble metal or mixtures thereof is subjected to an after-treatment by suspending it in an aqueous medium with the addition of an acid or salts thereof, and irradiating it again with light having a high UV-C content.

13. Cadmium sulfide and cadmium sulfoselenide semiconductor powders which are at least partially coated with Cu, Cr, Ni, Co or a noble metal or mixtures thereof.

14. Cadmium sulfoselenide and, in particular, cadmium sulfide/semiconductor powders, according to claim 13, which are at least partially coated with rhodium, nickel, osmium, ruthenium or nickel/rhodium or silver/platinum mixtures.

15. Cadmium sulfide or cadmium sulfoselenide/semiconductor powders, according to claim 13, which are at least partially coated with platinum.

## Revendications

1. Procédé pour produire sélectivement de l'hydrogène au moyen d'une catalyse hétérogène photorédox, procédé caractérisé en ce qu'on fait réagir des mélanges d'eau et de sulfites ou de sulfures de métaux alcalins, de métaux alcalinoterreux ou d'ammonium, sous l'action de la lumière, dans une suspension d'une poudre de semi-conducteur constituée de sulfure de cadmium, de sulfoséléniure de cadmium ou de dioxyde de titane et revêtue, au moins partiellement, par Cu, Cr, Ni, Co, un métal noble ou un mélange de ces métaux.

2. Procédé selon la revendication 1, caractérisé en ce qu'on utilise l'eau comme milieu de suspension.

3. Procédé selon la revendication 1, caractérisé en ce qu'on utilise un sulfite ou un sulfure de métal alcalin, le sulfite d'ammonium ou le sulfure d'ammonium.

4. Procédé selon la revendication 1, caractérisé en ce qu'on utilise le sulfite de sodium ou le sulfite d'ammonium.

0 058 136

5. Procédé selon la revendication 1, caractérisé en ce qu'on effectue la réaction entre 20 °C et le point d'ébullition du milieu de suspension utilisé.

6. Procédé selon la revendication 1, caractérisé en ce que les poudres de semi-conducteurs conformes à la définition, revêtues par les métaux, sont mises en jeu en une quantité de 0,05 à 8 % en poids par rapport au volume réactionnel.

7. Procédé selon la revendication 1, caractérisé en ce qu'on utilise des poudres de semi-conducteurs constituées de sulfo-séléniure de cadmium ou de dioxyde de titane (variété anatase) ou, mieux, de sulfure de cadmium, revêtues, au moins partiellement, de rhodium, de nickel, d'osmium, de ruthénium, d'un mélange de nickel et de rhodium ou d'un mélange d'argent et de platine.

8. Procédé selon la revendication 1, caractérisé en ce qu'on utilise une poudre de semi-conducteur constituée de sulfure de cadmium, de sulfoséléniure de cadmium ou de dioxyde de titane (variété anatase) et revêtue au moins partiellement de platine.

9. Procédé de préparation de poudres de semi-conducteurs constituées de sulfure de cadmium ou de sulfoséléniure de cadmium et revêtues, au moins partiellement, de Cu, de Cr, de Ni, de Co, d'un métal noble ou d'un mélange de ces métaux, procédé caractérisé en ce qu'on met en suspension la poudre de semi-conducteur constituée de sulfure de cadmium ou de sulfoséléniure de cadmium, en ajoutant un acide ou un sel de celui-ci, en suspension dans une solution ou suspension aqueuse d'un composé métallique correspondant ou d'un mélange de composés métalliques correspondants, puis on irradie au moyen d'une source de lumière dont le rayonnement est riche en ultra-violets de la région C.

10. Procédé de préparation de poudres de semi-conducteurs constituées de sulfure de cadmium, de sulfoséléniure de cadmium ou de dioxyde de titane et revêtues, au moins partiellement, de Cu, de Cr, de Ni, de Co, d'un métal noble ou d'un mélange de ces métaux, procédé caractérisé en ce qu'on imprègne la poudre de semi-conducteur constituée de sulfure de cadmium, de sulfoséléniure de cadmium ou de dioxyde de titane avec une solution aqueuse d'un composé métallique correspondant ou d'un mélange de composés métalliques correspondants, éventuellement en ajoutant un acide, après quoi on la sèche à température élevée et on réduit le composé métallique par $H_2$.

11. Procédé selon l'une des revendications 9 et 10, caractérisé en ce qu'on utilise du sulfure de cadmium ou du sulfoséléniure de cadmium qui a été préalablement traité en milieu aqueux en présence d'un acide ou d'un sel de celui-ci et qui a été irradié au moyen d'une source de lumière dont le rayonnement est riche en ultra-violets de la région C.

12. Procédé selon l'une des revendications 9 et 10, caractérisé en ce qu'on soumet la poudre de semi-conducteur constituée de sulfure de cadmium ou de sulfoséléniure de cadmium et revêtue de Cu, de Cr, de Ni, de Co, d'un métal noble ou d'un mélange de ces métaux à un traitement complémentaire consistant à mettre ladite poudre en suspension dans un milieu aqueux additionné d'un acide ou d'un sel de celui-ci et à l'irradier à nouveau par une lumière riche en ultra-violets de la région C.

13. Poudres de semi-conducteurs constituées de sulfure de cadmium et de sulfoséléniure de cadmium et revêtues, au moins partiellement, de Cu, de Cr, de Ni, de Co, d'un métal noble ou d'un mélange de ces métaux.

14. Poudres de semi-conducteurs constituées de sulfoséléniure de cadmium, plus particulièrement de sulfure de cadmium, et revêtues, au moins partiellement, de rhodium, de nickel, d'osmium, de ruthénium, d'un mélange de nickel et de rhodium ou d'un mélange d'argent et de platine, selon la revendication 13.

15. Poudres de semi-conducteurs constituées de sulfure de cadmium ou de sulfoséléniure de cadmium et revêtues, au moins partiellement, de platine, selon la revendication 13.

17